# EUROPÄISCHE PATENTSCHRIFT

(11) **EP 2 494 269 B1**
(45) Veröffentlichungstag und Bekanntmachung des Hinweises auf die Patenterteilung: **14.11.2018**
(21) Anmeldenummer: 10752320.1
(22) Anmeldetag: 07.09.2010
(51) Int. Cl.: F21V 14/08

(54) **VORRICHTUNG ZUR STEUERUNG EINES FAHRLICHTS EINES FAHRZEUGS**
DEVICE FOR CONTROLLING A LOW BEAM OF A VEHICLE
DISPOSITIF DE COMMANDE DES FEUX DE CROISEMENT D'UN VÉHICULE

(30) Priorität: 24.10.2009 DE 102009050622; 05.12.2009 DE 102009057219
(43) Veröffentlichungstag der Anmeldung: 05.09.2012
(73) Patentinhaber: Daimler AG, 70327 Stuttgart (DE)
(72) Erfinder: ACKERMANN, Ralf, 72138 Kirchentellinsfurt (DE); EGGERS, Helmuth, 71063 Sindelfingen (DE); KURZ, Gerhard, 73240 Wendlingen (DE); MOISEL, Jörg, 89233 Neu-Ulm (DE); OLTMANN, Volker, 75365 Calw (DE); REINHOLD, Volker, 71083 Herrenberg (DE); WOLTERMANN, Bernd, 70736 Fellbach (DE)
(74) Vertreter: JENSEN & SON
(86) Internationale Anmeldenummer: PCT/EP2010/005486
(87) Internationale Veröffentlichungsnummer: WO 2011/047751

(56) Entgegenhaltungen:
- EP-A1- 2 068 071
- WO-A1-2009/039882
- WO-A2-2008/037388
- US-A1- 2007 247 865
- US-A1- 2008 218 085

## Beschreibung

Die Erfindung betrifft ein Verfahren zur Verwendung einer Vorrichtung zur Steuerung eines Fahrlichts eines Fahrzeugs, welche aus zwei Scheinwerfern, einem linken Scheinwerfer und einem rechten Scheinwerfer, besteht, wobei die Scheinwerfer jeweils zumindest ein schwenkbares optisches Element zur Erzeugung eines Lichtbilds und/oder einer Fahrlichtverteilung umfassen, wobei das jeweilige optische Element eine Walze ist und auf der Walze mehrere Lichtdurchtrittsstrukturen zur Erzeugung verschiedener Lichtbilder und/oder Fahrlichtverteilungen auf- oder eingebracht sind, und wobei die Walze für den linken Scheinwerfer sich von der Walze für den rechten Scheinwerfer in mindestens einer Lichtdurchtrittsstruktur unterscheidet.

Aus der US 5 707 129 A ist ein Scheinwerfer für ein Kraftfahrzeug bekannt, welcher eine drehbare Blende umfasst, die aus einer linken und einer rechten Blende gebildet ist und eine vertikal steuerbare Abschirmeinrichtung erzeugt, anhand derer eine vertikale Bewegung und Einstellung einer Trennlinie einer mittels des Scheinwerfers erzeugten Abblendlichtverteilung entlang einer optischen Hauptachse steuerbar ist. Weiterhin umfasst der Scheinwerfer eine Einrichtung zum Erfassen eines Zustands, insbesondere einer Kurvigkeit einer Straße und eine Seiteneinstelleinrichtung zur Einstellung der optischen Hauptachse der Abblendlichteinrichtung in einer Horizontalebene. Die drehbare Blende ist um einen vorgegebenen Betrag in Abhängigkeit von Informationen über die Kurvigkeit der Straße, welche mittels eines Lenkwinkelsensors ermittelbar sind, einstellbar, so dass die vertikale Bewegung und Einstellung der Trennlinie erzeugbar ist. Zusätzlich umfasst der Scheinwerfer einen bewegbaren Reflektor mit einem in diesem angeordneten Leuchtmittel, welcher derart seitlich um einen vorgegebenen Betrag schwenkbar ist, dass ein Lichtverteilungsmuster und eine so genannte "Hot-Zone" bewegbar und einstellbar sind.

Ferner ist aus der US 2006 /0039158 A1 ein Fahrzeugscheinwerfersystem bekannt, welches eine Lichtquelle und wenigstens einen Reflektor zum Formen des von der Lichtquelle abgegebenen Lichtes zu einem Fernlicht- und einem Abblendlichtstrahl umfasst. Weiterhin umfasst das Fahrzeugscheinwerfersystem eine erste Blende, welche mit Hilfe eines Stellgliedes zwischen einer das Licht der Lichtquelle auf einen maximalen Querschnitt blockierenden Stellung und einer dieses Licht im Wesentlichen durchlassenden Stellung verstellbar ist. Dabei ist das Stellglied eingerichtet, die erste Blende in eine Mehrzahl von Zwischenstellungen zwischen der maximal blockierenden und der im Wesentlichen durchlassenden Stellung einzustellen, in denen der blockierte Querschnitt kleiner als der maximale Querschnitt ist.

Die US 6 281 806 B1 offenbart eine Vorrichtung zur Erfassung und Beleuchtung von Objekten für ein Fahrzeug, anhand welcher die Erfassung und Beleuchtung derart ausführbar ist, dass eine Aufmerksamkeit eines Fahrers des Fahrzeugs auf das erfasste Objekt gerichtet ist. Die Vorrichtung umfasst zumindest einen Sensor zur Erfassung von Informationen über eine Umgebung des Fahrzeugs, eine Bildverarbeitungseinheit zum Empfang von Daten des Sensors und zur Erzeugung eines Ausgangssignals. Dabei ist mittels eines Prozessors aus den Daten des Sensors ermittelbar, ob sich ein bestimmtes Objekt in der Umgebung des Fahrzeugs befindet, welches eine Alarmierung des Fahrers erfordert. Ferner umfasst die Vorrichtung eine Anordnung zum Betrieb einer Lichtquelle, anhand welcher das Ausgangssignal der Bildverarbeitungseinheit empfangbar ist und ein Kontrollsignal zum Betrieb der Lichtquelle erzeugbar ist, wobei die Lichtquelle in Abhängigkeit des Kontrollsignals aktivierbar ist und deren Lichtverteilung und Leuchtrichtung anhand des Kontrollsignals steuerbar sind. Dabei ist die Lichtquelle derart steuerbar, dass deren Lichtverteilung kontinuierlich auf das erfasste Objekt leitbar ist, auch wenn sich das Fahrzeug und/oder das Objekt relativ zueinander bewegen.

Weiterhin beschreibt die nachveröffentlichte Patentanmeldung DE 10 2009 035 327 A1 der Anmelderin ein Verfahren zur Steuerung eines Fahrlichts eines Fahrzeugs mit zumindest einem Scheinwerfer und mit zumindest einem Sensor zu einer Detektion von Objekten. Hierbei wird bei einer Kollisionsgefahr mit zumindest einem Objekt eine Sonderfunktion des Fahrlichts zur Warnung eines Fahrzeugführers und/oder anderer Verkehrsteilnehmer aktiviert.

In der EP 2 068 071 A1 wird ein Verfahren zum automatischen Anpassen des Lichtstrahls einer Scheinwerfereinheit an Fahrbedingungen beschrieben. Die Scheinwerfereinheit umfasst eine in einem Reflektor angeordnete Lichtquelle und eine mobile Abdeckung, welche mittels eines Schrittmotors um eine vertikale Achse drehbar ist. Die Abdeckung umfasst eine Maskenplatte und einen Streifen, dessen Höhe größer ist als seine Breite. Der Streifen und die Maskenplatte modifizieren den Lichtstrahl, indem sie eine laterale Diskontinuität in der Lichtintensität des Lichtstrahls verursachen. Die Maskenplatte weist einen rechteckigen Schlitz auf und erlaubt das Passieren des Lichtstrahls nur auf Höhe dieses rechteckigen Schlitzes.

Aus der US 2007/0247865 A1 ist ein Fahrzeugscheinwerfer bekannt. Eine Lampeneinheit weist eine Reflexionsfläche und eine Lichtaufnahmefläche für Schilderbrücken auf. Die Reflexionsfläche reflektiert Licht einer Lichtquelle und ist oberhalb der Lichtquelle und hinter einem rückseitigen Fokalpunkt einer Projektorlinse angeordnet. Die Lichtaufnahmefläche ist an einer Vorderseite eines bewegbaren Schirms zwischen der Projektorlinse und der Lichtquelle angeordnet und bildet die Schilderbrücke bestrahlendes Licht, indem sie Licht von der Reflexionsfläche in Richtung der Projektorlinse reflektiert. Es ist ein Beleuchtungsminderer zur Reduzierung eines Teils des abgestrahlten Lichts in der Nähe eines oberen Endes des bewegbaren Schirms vorgesehen.

In der US 2008/0218085 A1 wird eine Schalteinheit zum Schalten zwischen einem Abblendlichtmodus und einem Fernlichtmodus eines Xenonscheinwerfers beschrieben. Die Schalteinheit umfasst ein an einem Befestigungsteil befestigtes elektromagnetisches Ventil, zwei schwenkbar mit dem Befestigungsstück verbundene Lichtabschirmteile und ein durch das elektromagnetische Ventil bewegbares Teil. Zum Umschalten in den Abblendlichtmodus werden durch die Bewegung des bewegbaren Teils mittels des elektromagnetischen Ventils die beiden Lichtabschirmteile zu einem Spalt im Befestigungsteil gedreht, um den Lichtstrahl der Xenonlampe zu behindern. Durch eine Bewegung in umgekehrter Richtung wird wieder in den Fernlichtmodus geschaltet.

Aus der WO 2009/039882 A1 ist eine Projektionsscheinwerferanordnung für Fahrzeuge bekannt. Die Projektionsscheinwerferanordnung umfasst einen linken Projektionsscheinwerfer und einen rechten Projektionsscheinwerfer, die jeweils einen Reflektor, eine Lichtquelle, eine Linse und eine Blendenwelle umfassen. Die jeweilige Blendenwelle ist um eine horizontale, quer zur optischen Achse verlaufende Drehachse in mehrere Drehstellungen verstellbar, wobei eine Mantelfläche der Blendenwelle für jede Drehstellung eine Brennlinie aufweist, welche eine Hell-Dunkel-Grenze einer Lichtverteilung erzeugt. Der linke Projektionsscheinwerfer und der rechte Projektionsscheinwerfer weisen die gleiche Blendengeometrie auf, wobei die Brennlinien derselben bezüglich einer zwischen dem linken Projektionsscheinwerfer und dem rechten Projektionsscheinwerfer verlaufenden vertikalen Spiegelebene gespiegelt angeordnet sind. Die Brennlinien des linken Projektionsscheinwerfers und des rechten Projektionsscheinwerfers verlaufen derart, dass mittels der Brennlinie des linken bzw. des rechten Projektionsscheinwerfers eine erste bzw. eine zweite Teillichtverteilung abgebildet wird, die sich zu einer Gesamtlichtverteilung überlagern. Die Gesamtlichtverteilung weist einen Lichtaussparungsbereich auf, der von gegenüberliegenden seitlichen zwei Flanken begrenzt ist, wobei die erste Flanke durch die erste Teillichtverteilung und die zweite Flanke durch die zweite Teillichtverteilung gebildet ist.

In der WO 2008/037388 A2 werden eine Scheinwerferanordnung für ein Fahrzeug und ein Verfahren zum Steuern einer Scheinwerferanordnung beschrieben. In dem Verfahren zum Steuern einer Scheinwerferanordnung für ein Fahrzeug mit zumindest zwei beabstandeten Scheinwerfern, die jeweils einen Lichtstrahl zum Erzeugen einer Gesamtlichtverteilung emittieren, und mit jeweils einer Blendenanordnung für jeden der zwei Scheinwerfer, deren Lage zum Verändern der Gesamtlichtverteilung veränderbar ist, wird ein Verkehrsteilnehmer in Richtung der Lichtemission der Scheinwerferanordnung erfasst und, wenn ein solcher Verkehrsteilnehmer erfasst wurde, wird die Lage zumindest einer Blendenanordnung verändert, so dass bei der Gesamtlichtverteilung der Scheinwerferanordnung in Richtung des erfassten Verkehrsteilnehmers ein Mittelbereich mit geringerer Leuchtweite und beidseitig neben diesem Mittelbereich Seitenbereiche mit größerer Leuchtweite gebildet werden. Die Scheinwerferanordnung umfasst zumindest zwei beabstandete Projektionsscheinwerfer, die jeweils einen Lichtstrahl zum Erzeugen einer Gesamtlichtverteilung emittieren, und eine Blendenanordnung für jeden der zwei Projektionsscheinwerfer, die jeweils zumindest zwei relativ zum Lichtstrahl bewegbare Blenden zum selektiven Verändern der Gesamtlichtverteilung umfassen.

Der Erfindung liegt die Aufgabe zugrunde, ein gegenüber dem Stand der Technik verbessertes Verfahren zur Verwendung einer Vorrichtung zur Steuerung eines Fahrlichts eines Fahrzeugs anzugeben.

Die Aufgabe wird erfindungsgemäß mit einem Verfahren zur Verwendung einer Vorrichtung gelöst, welche die im Anspruch 1 angegebenen Merkmale aufweist.

Eine Vorrichtung zur Steuerung eines Fahrlichts eines Fahrzeugs besteht aus zwei Scheinwerfern, einem linken Scheinwerfer und einem rechten Scheinwerfer, wobei die Scheinwerfer jeweils zumindest ein schwenkbares optisches Element zur Erzeugung eines Lichtbilds und/oder einer Fahrlichtverteilung umfassen, wobei das jeweilige optische Element eine Walze ist und auf der Walze mehrere Lichtdurchtrittsstrukturen zur Erzeugung verschiedener Lichtbilder und/oder Fahrlichtverteilungen auf- oder eingebracht sind, und wobei die Walze für den linken Scheinwerfer sich von der Walze für den rechten Scheinwerfer in mindestens einer Lichtdurchtrittsstruktur unterscheidet.

In einem erfindungsgemäßen Verfahren zur Verwendung dieser Vorrichtung wird eine Kollisionsgefahr mit einem unbeleuchteten Objekt detektiert, wobei bei einer detektierten Kollisionsgefahr mit dem unbeleuchteten Objekt eine Sonderfunktion des Fahrlichts aktiviert wird, wobei mit einer Lichtdurchtrittsstruktur in Form einer Lichtdurchtrittsöffnung der Walze des linken Scheinwerfers eine auf das unbeleuchtete Objekt vor dem Fahrzeug gerichtete begrenzte Lichtfläche erzeugt wird, wobei Mittel zum horizontalen Schwenken einer Lichtverteilung verwendet werden, um die begrenzte Lichtfläche auf das unbeleuchtete Objekt zu schwenken, und mittels der Walze des rechten Scheinwerfers in Abhängigkeit von einem entgegenkommenden oder vorausfahrenden Fahrzeug ein Lichtbild und/oder eine Fahrlichtverteilung wie Abblendlicht oder Fernlicht oder Teilfernlicht erzeugt wird.

Dadurch ist es in besonders vorteilhafter Weise möglich, mit geringem Material- und Kostenaufwand auch bei als Gasentladungslampen und/oder Glühbirnen ausgebildeten Lichtquellen eine einfach steuerbare und effektive so genannte Gefahrenlichtfunktion zu realisieren. Insbesondere ist das optische Element eine Walze oder eine Blende, so dass diese gleichzeitig zur Steuerung der Leuchtweite und verschiedener Lichtverteilungen einsetzbar ist. Daraus folgt in Gewinn bringender Weise, dass mittels des optischen Elements gleichzeitig die Gefahrenlichtfunktion und ein so genannter intelligenter, automatischer Lichtassistent realisierbar sind.

Bei einer Weiterbildung des Verfahrens erzeugt die Walze des linken Scheinwerfers ausgehend von der Lichtdurchtrittsöffnung für eine begrenzte Lichtfläche durch Drehung in eine Richtung als nächstgelegenes Lichtbild ein Lichtbild Fernlicht oder ein Lichtbild Teilfernlicht und danach das Lichtbild Fernlicht.

Aufgrund der Anordnung der Lichtdurchtrittsöffnung und der weiteren Lichtdurchtrittsstrukturen auf oder in dem optischen Element sind mittels des einen optischen Elementes und dadurch mit geringem Material- und Kostenaufwand alle erforderlichen Lichtbilder des Fahrzeugs erzeugbar, wobei aufgrund der Reihenfolge der Anordnung der Lichtdurchtrittsöffnung und der weiteren Lichtdurchtrittsstrukturen auf oder in dem optischen Element ein Übergang zwischen den Lichtbildern kontinuierlich und für einen Fahrzeugführer auf angenehme Weise erfolgt.

Scheinwerfer umfassend zumindest ein optisches Element zur Erzeugung eines Lichtbilds und/oder einer Fahrlichtverteilung, wobei ein optisches Element eine Walze ist und auf der Walze mehrere Lichtdurchtrittsstrukturen zur Erzeugung verschiedener Lichtbilder und/oder Fahrlichtverteilungen auf- oder eingebracht sind, die Walze eine Lichtdurchtrittsstruktur in Form einer Lichtdurchtrittsöffnung aufweist und mit der Lichtdurchtrittsöffnung eine begrenzte Lichtfläche auf das unbeleuchtete Objekt vor dem Fahrzeug erzeugbar und die Lichtdurchtrittsöffnung in vertikaler und/oder horizontaler Richtung zu der optischen Achse der Lichtquelle versetzt angeordnet ist, derart dass sich eine symmetrische Schwenkbarkeit für die begrenzte Lichtfläche ergibt.

Mit einer symmetrischen Schwenkbarkeit der begrenzten Lichtfläche können auf vorteilhafte Weise Objekte am linken und rechten Fahrbahnrand angeleuchtet werden.

Vorteilhafte Ausgestaltungen der Erfindung sind Gegenstand der Unteransprüche.

Ausführungsbeispiele der Erfindung werden im Folgenden anhand von Zeichnungen näher erläutert.

Dabei zeigen:
- Fig. 1: schematisch ein Fahrzeug auf einer Straße und ein vor dem Fahrzeug befindliches Objekt in einer Draufsicht und eine mittels einer Vorrichtung zur Steuerung eines Fahrlichts des Fahrzeugs erzeugte Fahrlichtverteilung nach dem Stand der Technik,
- Fig. 2: schematisch die Fahrlichtverteilung in einer zweiten Ansicht nach dem Stand der Technik,
- Fig. 3: schematisch eine Ausführungsform eines als Walze ausgebildeten optischen Elements zur Erzeugung der Fahrlichtverteilung gemäß Figur 1 nach dem Stand der Technik,
- Fig. 4: schematisch eine mittels der Vorrichtung zur Steuerung des Fahrlichts des Fahrzeugs erzeugte Gefahrenlichtverteilung,
- Fig. 5: schematisch eine Ausführungsform eines als Walze ausgebildeten optischen Elements zur Erzeugung der Gefahrenlichtverteilung gemäß Figur 4,
- Fig. 6: schematisch eine Ausführungsform eines als Blende ausgebildeten optischen Elements zur Erzeugung der Gefahrenlichtverteilung gemäß Figur 4,
- Fig. 7: schematisch eine Anordnung einer Lichtdurchtrittsöffnung des optischen Elements im Bezug zur optischen Achse einer Lichtquelle, und
- Fig. 8: schematisch eine weitere Anordnung einer Lichtdurchtrittsöffnung des optischen Elements im Bezug zur optischen Achse einer Lichtquelle.
- Fig. 9: schematisch eine erste Abfolge von einzustellenden Lichtbildern,
- Fig. 10: schematisch eine zweite Abfolge von einzustellenden Lichtbildern,
- Fig. 11: schematisch ein Lichtbild "symmetrisches Licht",
- Fig. 12: schematisch ein Lichtbild "Landstraße",
- Fig. 13: schematisch ein Lichtbild "Autobahn",
- Fig. 14: schematisch ein Lichtbild "Gefahrenlicht",
- Fig. 15: schematisch ein Lichtbild "Fernlicht", und
- Fig. 16: schematisch ein Lichtbild "Teilfernlicht".

Einander entsprechende Teile sind in allen Figuren mit den gleichen Bezugszeichen versehen.

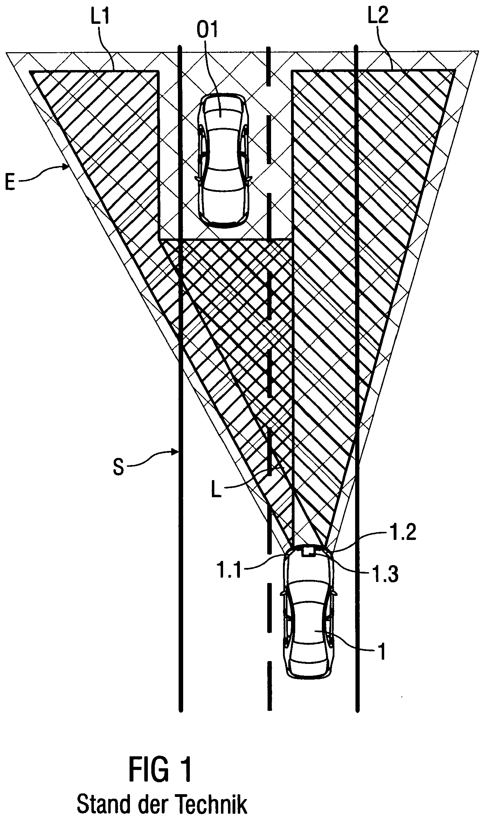

In Figur 1 ist ein Fahrzeug 1, welches sich auf einer Straße S bewegt, dargestellt. Das Fahrzeug 1 umfasst zwei Scheinwerfer 1.1, 1.2, welche Lichtquellen (= Leuchtmittel) in nicht näher dargestellter Weise, vorzugsweise Gasentladungslampen oder Glühlampen, insbesondere Halogenglühlampen aufweisen. Dabei sind insbesondere separate Lichtquellen zur Erzeugung einer Abblendlichtverteilung und einer Fernlichtverteilung vorgesehen.

Das Fahrzeug 1 umfasst ferner zumindest einen Sensor 1.3 zur Erfassung von Objekten O1 in der Umgebung des Fahrzeugs 1, wobei sich ein Erfassungsbereich E des Sensors 1.3 im dargestellten Ausführungsbeispiel über einen breiten Vorfeldbereich des Fahrzeugs 1 erstreckt, so dass mittels des Sensors 1.3 die Objekte O1 in diesem Vorfeldbereich erfassbar sind und eine Entfernung zu den Objekten O1 ermittelbar ist.

In weiteren bevorzugten Ausführungsformen wird mittels des Sensors 1.3 oder einer Mehrzahl von Sensoren 1.3 bevorzugt ein gesamtes Umfeld des Fahrzeugs 1 erfasst. Bei dem Sensor 1.3 oder der Mehrzahl von Sensoren 1.3 handelt es sich beispielsweise um einen oder mehrere Radarsensoren, Kameras, Stereokamerasysteme, Infrarotsensoren, Ultraschallsensoren, Lidarsensoren und/oder Lasersensoren. Bevorzugt werden mehrere dieser Sensoren 1.3 eingesetzt, wobei auch eine Kombination verschiedener Sensoren 1.3 möglich und vorteilhaft ist, um ein möglichst großes Umfeld des Fahrzeugs 1 zu erfassen.

Mittels derartiger Sensoren 1.3 und weiterer nicht dargestellter Sensoren des Fahrzeugs 1 sind beispielsweise auch eine Geschwindigkeit, eine Beschleunigung und eine Gierrate des Fahrzeugs 1 sowie eine Geschwindigkeit, eine Beschleunigung und eine Bewegungsrichtung der erfassten Objekte O1 sowie eine Relativgeschwindigkeit und Relativbeschleunigung in Bezug auf das Fahrzeug 1 ermittelbar. Aus den derart erfassten Daten ist wiederum eine Kollisionsgefahr des zumindest einen erfassten Objekts O1 mit dem Fahrzeug 1 ermittelbar.

Neben der Erfassung dieser Daten wird vorzugsweise weiterhin eine Art des Objekts O1 ermittelt, wobei im dargestellten Ausführungsbeispiel das Objekt O1 ein weiteres Fahrzeug ist, welches dem Fahrzeug 1 auf einer linken Fahrbahn der Straße S entgegenkommt.

Weiterhin sind als Objekte O1 Fußgänger, Radfahrer, Tiere, ortsfeste Objekte, wie z. B. Randbebauungen, sowie weitere Verkehrsteilnehmer erfassbar und ermittelbar.

In einer vorteilhaften, nicht näher dargestellten Weiterbildung ist es möglich, auch mittels einer direkten oder indirekten Kommunikationsverbindung des Fahrzeugs 1 zu dem zumindest einen Objekt O1 Daten des Objekts O1 zu erfassen. Diese Daten umfassen beispielsweise eine Position, eine Fahrtrichtung, eine Geschwindigkeit und/oder eine Beschleunigung des Objekts O1, so dass auch aufgrund einer Auswertung derartiger Daten eine mögliche Kollisionsgefahr des Fahrzeugs 1 mit dem Objekt O1 in dessen Umfeld feststellbar ist.

Anhand der Scheinwerfer 1.1, 1.2 sind insbesondere mittels eines so genannten automatischen Lichtassistenten ausgeführte Funktionen in besonders einfacher Weise realisierbar. Unter einem automatischen Lichtassistenten wird dabei ein Fahrerassistenzsystem verstanden, welches in Abhängigkeit von in der Umgebung des Fahrzeugs 1 erfassten beweglichen und/oder unbeweglichen Objekten O1, einer aktuellen Verkehrssituation und/oder in Abhängigkeit davon, auf welcher Art von Straße S sich das Fahrzeug 1 bewegt, ein Fahrlicht L des Fahrzeugs 1 automatisch einstellt. Dabei wird das Fahrlicht L insbesondere automatisch zwischen einem Fernlicht, einem Teilfernlicht und einem Abblendlicht geschaltet, so dass der Fahrer des Fahrzeugs F mit dauerhaft aktivierter Fernlichteinstellung fahren kann, wobei eine Leuchtweite, eine Ausleuchtcharakteristik und/oder ein horizontaler Schwenkwinkel automatisch derart eingestellt werden, dass stets eine an die momentane Situation angepasste Ausleuchtung des vor dem Fahrzeug F befindlichen Bereichs erfolgt und andere Verkehrsteilnehmer nicht geblendet werden.

Um die Blendung des Objekts O1 durch das Fahrlicht L des Fahrzeugs 1 zu vermeiden, sind Lichtverteilungen L1, L2 der Scheinwerfer 1.1, 1.2 anhand des automatischen Lichtassistenten derart einstellbar, dass zumindest eine Position der vom Sensor 1.3 erfassten Objekte O1 insbesondere bis zu einem Erreichen einer Leuchtweite des Abblendlichts aus den Lichtverteilungen L1, L2 ausgespart wird.

Im dargestellten Ausführungsbeispiel sind die Lichtverteilungen L1, L2 derart eingestellt, dass das Fahrlicht L der Scheinwerfer 1.1, 1.2 einer Fernlichtverteilung entspricht, wobei zur Vermeidung der Blendung eines Fahrers des entgegenkommenden Fahrzeugs, d. h. des Objekts O1, jeweils ein Bereich aus den Lichtverteilungen L1, L2 ausgespart ist. Dabei sind die Bereiche derart ausgespart, dass die Lichtverteilungen L1, L2 jeweils bis maximal an eine Kante des Objekts O1 reichen. Somit wird eine Fahrlichtverteilung erzeugt, welche im Folgenden als "Fernlicht mit definierter Lücke" bezeichnet ist.

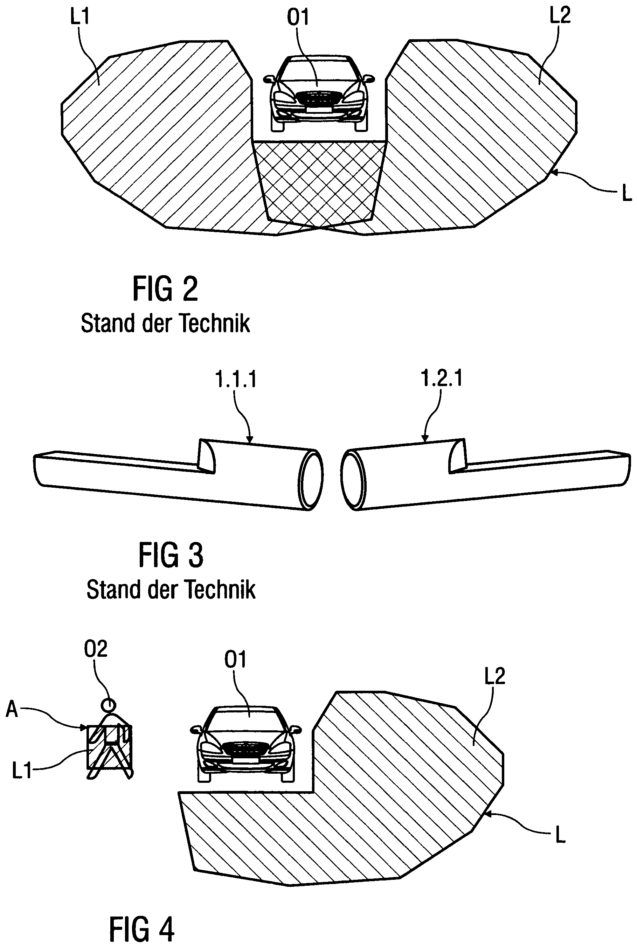

Figur 2 zeigt diese als "Fernlicht mit definierter Lücke" ausgebildete Fahrlichtverteilung und das Objekt O1 in einer perspektivischen Ansicht von dem Fahrzeug 1 aus.

Zur Erzeugung der verschiedenen Lichtbilder und Fahrlichtverteilungen umfassen die Scheinwerfer 1.1, 1.2 des Fahrzeugs 1 jeweils zumindest ein optisches
Element 1.1.1, 1.2.1, welche, wie in Figur 3 dargestellt, beispielsweise als so genannte Walzen ausgebildet sind.

Die jeweilige Walze ist dabei vor der Lichtquelle des zugehörigen Scheinwerfers 1.1, 1.2 angeordnet sowie in horizontaler und/oder vertikaler Richtung verschiebbar und drehbar. Weiterhin sind auf einer Oberfläche der Walze Strukturen derart aufgebracht und/oder eingebracht, dass durch eine Positionierung der Walze vor der Lichtquelle des jeweiligen Scheinwerfers 1.1, 1.2 die verschiedenen Lichtverteilungen L1, L2, d. h. vertikale und horizontale Hell-Dunkel-Grenzen, erzeugbar sind. Die Walzen der Scheinwerfer 1.1, 1.2 sind dabei insbesondere komplementär zueinander ausgebildet, um die dargestellten Lichtverteilungen L1, L2 zu erzeugen.

Um weiterhin auch eine so genannte Kurvenlichtfunktion und/oder Abbiegelichtfunktion mittels der Scheinwerfer 1.1, 1.2 zu realisieren, umfassen diese vorzugsweise nicht näher dargestellte Mittel zum horizontalen Schwenken der Lichtverteilungen L1, L2. Bei diesen Mitteln handelt es sich beispielsweise um Elektromotoren und hydraulisch betriebene Mittel, anhand welcher die Lichtquellen selbst oder beispielsweise Reflektoren, Blenden und/oder Walzen bewegbar sind, so dass die Lichtverteilungen L1, L2 insbesondere in Abhängigkeit von einem Lenkwinkel des Fahrzeugs 1 und vorzugsweise in Abhängigkeit von dessen Geschwindigkeit geschwenkt werden, um eine für den Fahrer des Fahrzeugs 1 optimierte Sicht zu erzielen.

In Figur 4 ist neben dem Objekt O1 ein weiteres Objekt O2 dargestellt, in diesem Beispiel ein Fußgänger. Aus der dargestellten Fahrlichtverteilung nach dem Stand der Technik gemäß den Figuren 1 und 2 kann jedoch insbesondere bei derartigen unbeleuchteten Objekten O2, wie Fußgängern oder Tieren, eine verminderte Sichtbarkeit des weiteren Objekts O2 für den Fahrer des Fahrzeugs 1 folgen, woraus wiederum eine erhöhte Kollisionsgefahr mit dem weiteren Objekt O2 resultiert. Um diese Kollisionsgefahr zu vermeiden, wird bei einer detektierten Kollisionsgefahr mit dem weiteren Objekt O2 eine Sonderfunktion des Fahrlichts L aktiviert.

Figur 4 zeigt ein mögliches Ausführungsbeispiel einer derartigen Sonderfunktion des Fahrlichts L, wobei ein Strahlenbündel der Lichtverteilung L1 und/oder Lichtverteilung L2 derart begrenzt und/oder abgelenkt ist, dass in einem vorgebbaren Bereich vor dem Fahrzeug 1 eine begrenzte Lichtfläche A, insbesondere ein so genannter Spot erzeugbar ist.

Diese begrenzte Lichtfläche A ist vorzugsweise auf das erfasste weitere Objekt O2 gerichtet, wobei im dargestellten Ausführungsbeispiel die Lichtverteilung L1 des in Fahrtrichtung linken Scheinwerfers 1.1 des Fahrzeugs 1 als begrenzte Lichtfläche A ausgebildet ist. In weiteren, nicht näher dargestellten Ausführungsbeispielen kann alternativ oder zusätzlich auch die Lichtverteilung L2 des rechten Scheinwerfers 1.2 derart ausgebildet sein, dass eine begrenzte Lichtfläche A durch diesen erzeugbar ist. Von welchem Scheinwerfer 1.1 oder 1.2 die begrenzte Lichtfläche A erzeugt wird, ist insbesondere von einer relativen Position des weiteren Objekts O2 zu dem Fahrzeug 1 abhängig.

Aufgrund der Erzeugung der begrenzten Lichtfläche A wird die Aufmerksamkeit des Fahrers des Fahrzeugs 1 auf das weitere Objekt O2 gerichtet, so dass dieser frühzeitig Maßnahmen einleiten kann, um eine Kollision mit dem weiteren Objekt O2 zu vermeiden. Auch wird die Aufmerksamkeit des weiteren Objekts O2 bzw., wenn das weitere Objekt O2 ein Fahrzeug ist, die Aufmerksamkeit dessen Fahrers auf das herannahende Fahrzeug 1 gerichtet, so dass das weitere Objekt O2 bzw. dessen Fahrer das Fahrzeug 1 frühzeitig wahrnimmt und ebenfalls Maßnahmen einleiten kann, um eine Kollision mit dem Fahrzeug 1 zu vermeiden.

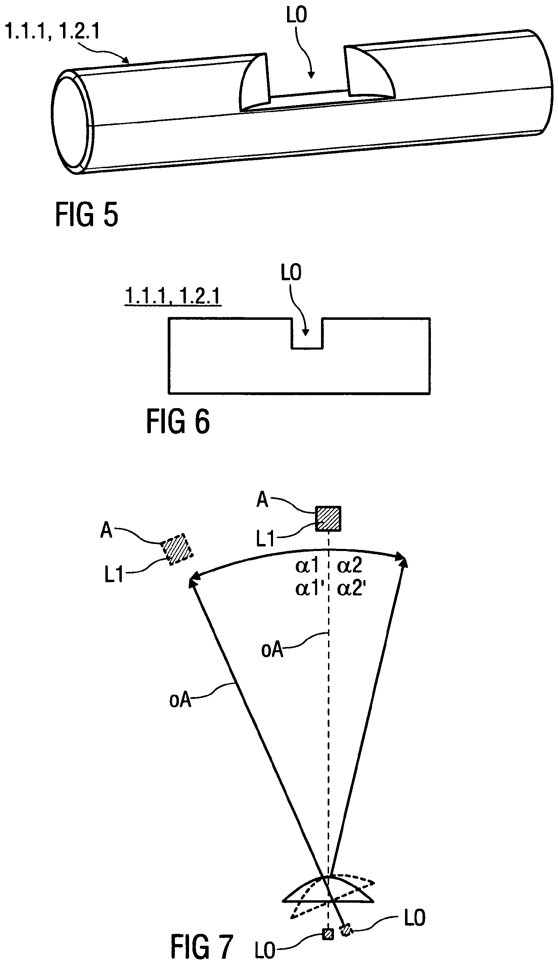

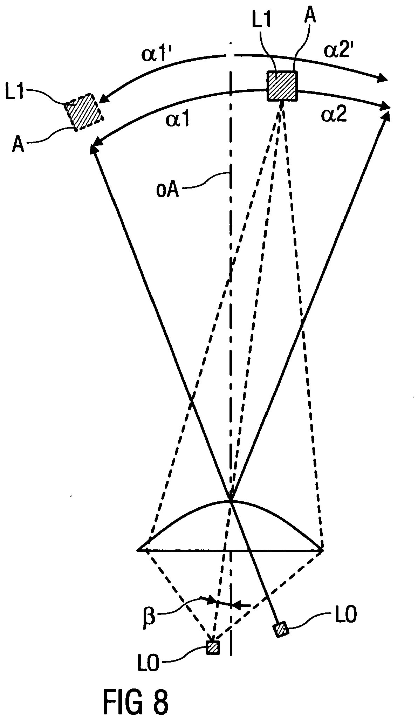

In Figur 5 ist ein Ausführungsbeispiel des als Walze ausgebildeten optischen Elements 1.1.1 bzw. 1.2.1 dargestellt. Das optische Element 1.1.1 bzw. 1.2.1 umfasst zur Erzeugung der begrenzten Lichtfläche A eine Lichtdurchtrittsöffnung LO und ist bei einer detektierten Gefahrensituation, wie z. B. einer Kollisionsgefahr mit dem weiteren Objekt O2 derart in eine in den Figuren 7 und 8 dargestellte optische Achse oA der Lichtquelle des Jeweiligen Scheinwerfers 1.1, 1.2 schwenkbar, dass die begrenzte Lichtfläche A erzeugt wird. Die begrenzte Lichtfläche A weist hierbei die gleiche Außenform wie die Lichtdurchtrittsöffnung LO auf.

Dabei ist die Lichtdurchtrittsöffnung LO vorzugsweise im Wesentlichen senkrecht zur optischen Achse oA der Lichtquelle angeordnet.

Um die begrenzte Lichtfläche A auf das weitere Objekt O2 zu schwenken, werden die Mittel zum horizontalen Schwenken der Lichtverteilungen L1, L2 verwendet. Weiterhin wird vorzugsweise eine Höhe der Anordnung des optischen Elements 1 derart gewählt, dass auch eine Höhe der begrenzten Lichtfläche A einstellbar ist. Alternativ oder zusätzlich werden Mittel zur Ausführung einer Leuchtregulierung zur Einstellung der Höhe angesteuert. Hierbei wird eine horizontale Hell-Dunkel-Grenze vorzugsweise derart eingestellt, dass eine Blendung von Personen ausgeschlossen ist.

Über den Umfang des als Walze ausgebildeten optischen Elements 1.1.1 und/oder 1.2.1 sind des Weiteren neben der Lichtdurchtrittsöffnung LO weitere nicht näher dargestellte Lichtdurchtrittstrukturen eingebracht und/oder aufgebracht, so dass neben der Erzeugung der begrenzten Lichtfläche A weitere Lichtverteilungen L1 und/oder L2 erzeugbar sind, die zu verschiedenen so genannten Lichtbildern führen.

Dabei sind das oder die optischen Elemente 1.1.1 und/oder 1.2.1 derart ausgebildet und eine oder mehrere Lichtquellen eines oder beider Scheinwerfer 1.1, 1.2 werden derart angesteuert, dass folgende Lichtbilder erzeugbar sind:
- Abblendlicht mit einer auf das weitere Objekt O2 gerichteten begrenzten Lichtfläche A, dem so genannten Spot,
- das Fahrlicht "Fernlicht mit definierter Lücke"
- Abblendlicht mit auf das weitere Objekt O2 gerichteter begrenzter Lichtfläche A mittels eines Scheinwerfers 1.1 oder 1.2 und "Fernlicht mit definierter Lücke" mittels des verbleibenden Scheinwerfers 1.2 oder 1.1,
- "Blinken" der Scheinwerfer 1.1 und/oder 1.2 durch Ein- und/Ausschalten der jeweiligen Lichtquelle zur Erzeugung des Abblendlichts mit auf das weitere Objekt O2 gerichteter begrenzter Lichtfläche A und des "Fernlichts mit definierter Lücke".

Die Lichtdurchtrittsstrukturen auf den als Walze ausgebildeten optischen Elementen 1.1.1 und/oder 1.2.1 sind vorzugsweise derart auf diese aufgebracht, dass eine Reihenfolge der Lichtbilder bei einer Drehung der Walze wie folgt ausgebildet ist:
- 1. Abblendlichtverteilung,
- 2. Abblendlicht mit auf das weitere Objekt O2 gerichteter begrenzter Lichtfläche A,
- 3. Teilfernlicht oder eine mittels einer Leuchtweitenregulierung eingestellte maximale Leuchtweite,
- 4. "Fernlicht mit definierter Lücke",
- 5. Fernlichtverteilung,
- 1. Abblendlichtverteilung oder
- 1. Abblendlichtverteilung,
- 2. Teilfernlicht oder eine mittels einer Leuchtweitenregulierung eingestellte maximale Leuchtweite,
- 3. Fernlichtverteilung,
- 4. "Fernlicht mit definierter Lücke",
- 5. Abblendlicht mit auf das weitere Objekt O2 gerichteter begrenzter Lichtfläche A,
- 1. Abblendlichtverteilung.

Der Wechsel zwischen den unterschiedlichen Lichtbildern kann dabei sowohl für einen jeweiligen Scheinwerfer 1.1, 1.2 als auch zwischen den Scheinwerfern 1.1, 1.2 durchgeführt werden, wobei der Wechsel als "Blinken" zwischen den Lichtbildern erfolgen kann, indem durch Drehen, Schwenken und/oder Verschieben des optischen Elementes 1.1.1, 1.2.1 mit einer vorgegebenen Geschwindigkeit und in einem vorgegebenen Rhythmus alternierend die Lichtdurchtrittsöffnung LO und zumindest eine weitere Lichtdurchtrittsstruktur in der optischen Achse oA der Lichtquelle angeordnet sind.

Dadurch ist beispielsweise, so lange eine Gefahrensituation besteht, abwechselnd vom Abblendlicht mit auf das weitere Objekt O2 gerichteter begrenzter Lichtfläche A in die Abblendlichtverteilung und zurück umschaltbar. Analog ist abwechselnd vom "Fernlicht mit definierter Lücke" in die Fernlichtverteilung umschaltbar. Eine Verstellgeschwindigkeit des optischen Elements 1.1.1, 1.2.1 und Haltezeiten für die jeweiligen Lichtverteilungen sind vorzugsweise mit optimalen Werten vorgegeben. So ist das "Blinken" insbesondere in einem Frequenzbereich zwischen 2 Hz und 10 Hz ausführbar. Daraus folgt eine Erhöhung der Wahrnehmung des weiteren Objekts O2 durch den Fahrer des Fahrzeugs 1 und eine verbesserte Wahrnehmung des Fahrzeugs 1 durch das weitere Objekt O2 bzw. dessen Fahrer. Gleichzeitig ist eine Blendung des weiteren Objekts O2 durch das Fahrlicht L des Fahrzeugs 1 vermieden.

Dabei wird beim Anleuchten des weiteren Objekts O2 eine Einstellzeit auf die Zielkoordinaten des weiteren Objekts O2 berechnet und eine Geschwindigkeit einer Drehung der Walze sowie eine Geschwindigkeit einer Betätigung der weiteren Mittel zur Einstellung der horizontalen und vertikalen Hell-Dunkel-Grenze werden aufeinander abgestimmt eingestellt.

Hierbei sind die Lichtdurchtrittsstrukturen der Walzen für den rechten und den linken Scheinwerfer 1.1, 1.2 vorzugsweise in einer unterschiedlichen Reihenfolge aufgebracht, so dass ein Wechsel der Lichtbilder möglichst unauffällig ausführbar ist.

In einer besonders vorteilhaften Ausgestaltung sind auf den Walzen der Scheinwerfer 1.1, 1.2 unterschiedliche Lichtdurchtrittsstrukturen angeordnet, so dass mittels der Scheinwerfer 1.1, 1.2 verschiedene Lichtbilder erzeugbar sind, woraus wiederum eine geringe Auffälligkeit beim Wechsel der Lichtbilder folgt. Dabei kann beispielsweise der Wechsel, d. h. das Blinken von der "Abblendlichtverteilung" auf das "Abblendlicht mit auf das weitere Objekt O2 gerichteter begrenzter Lichtfläche A" mittels des linken Scheinwerfers 1.1 und das Blinken von der "Fernlichtverteilung" auf das "Fernlicht mit definierter Lücke" mittels des rechten Scheinwerfers 1.2 erfolgen.

Um eine Erhöhung der Auffälligkeit des Lichtbildes "Fernlicht mit definierter Lücke" zu erzeugen, wird der jeweils andere Scheinwerfer 1.1, 1.2 vorzugsweise mit dem Lichtbild "Abblendlichtverteilung" betrieben.

Eine Breite der definierten Lücke wird hierbei durch eine unterschiedliche Überlappung der Lichtverteilungen L1, L2 anhand der optischen Elemente 1.1.1 und/oder 1.2.1 eingestellt, wobei bei sehr ausgedehnten weiteren Objekten O2, wie beispielsweise einer Personengruppe, zusätzlich anhand der Mittel zum horizontalen Schwenken horizontal über den betreffenden Bereich geschwenkt wird.

Des Weiteren wird vorzugsweise eine Lichtleistung der Lichtquellen bei aktivem Gefahrenlicht erhöht oder an eine Umgebungshelligkeit angepasst, um eine hohe und angepasste Auffälligkeit des Gefahrenlichts zu erzeugen.

Gemäß einer weiteren Ausgestaltung werden zusätzlich nicht näher dargestellte Scheinwerfer oder weitere Leuchtmittel der Scheinwerfer 1.1, 1.2 aktiviert, um ein Abbiegelicht zu erzeugen, welches auf seitlich vor dem Fahrzeug 1 befindliche weitere Objekte O2 gerichtet ist.

Figur 6 stellt eine alternative Ausführungsform der optischen Elemente 1.1.1, 1.2.1 dar, wobei diese als Blende mit einer Lichtdurchtrittsöffnung LO ausgebildet sind. Mittels einer horizontalen und/oder vertikalen Verschiebung der Blende sind ebenfalls die begrenzte Lichtfläche A und weitere Lichtbilder erzeugbar.

Figur 7 zeigt eine Anordnung der Lichtdurchtrittsöffnung LO des optischen Elements 1.1.1 im Bezug zur optischen Achse oA der Lichtquelle des linken Scheinwerfers 1.1, wobei die Lichtdurchtrittsöffnung LO auf der optischen Achse oA angeordnet ist. Aufgrund einer begrenzten und unsymmetrischen Schwenkbarkeit anhand der Mittel zum horizontalen Schwenken um einen linken Schwenkwinkel a1 von beispielsweise 15° und einen rechten Schwenkwinkel a2 von beispielsweise 7,5° sind auch die Schwenkwinkel a1' und a2' der Lichtdurchtrittsöffnung LO und somit der begrenzten Lichtfläche A unsymmetrisch.

Um eine symmetrische Gefahrenlichtverteilung zu erzielen und somit auch einen rechten Fahrbahnbereich mit der begrenzten Lichtfläche A zu erreichen, ist die Lichtdurchtrittsöffnung LO gemäß einer besonders vorteilhaften Weiterbildung der Erfindung in horizontaler Richtung zu der optischen Achse oA der Lichtquelle versetzt angeordnet.

Diese Anordnung ist in Figur 8 schematisch dargestellt. Aus einer horizontalen Versetzung der Lichtdurchtrittsöffnung LO um einen Winkel β von beispielsweise 3,75° nach links resultiert bei einem linken Schwenkwinkel a1 von beispielsweise 15° und einem rechten Schwenkwinkel a2 von beispielsweise 7,5° eine symmetrische Schwenkbarkeit der begrenzten Lichtfläche A von jeweils 11.25° um die Schwenkwinkel a1' und a2', so dass sowohl ein rechter als auch ein linker Fahrbahnbereich mit der begrenzten Lichtfläche A erreichbar sind. Auf diese Weise ist die Gefahrenlichtverteilung auf das jeweilige zu beleuchtende Objekt O2, mit welchem eine Kollisionsgefahr besteht, schwenkbar.

In einer nicht näher dargestellten Weiterbildung der Erfindung ist die Lichtdurchtrittsöffnung LO zusätzlich vertikal zu der optischen Achse oA der Lichtquelle versetzt angeordnet.

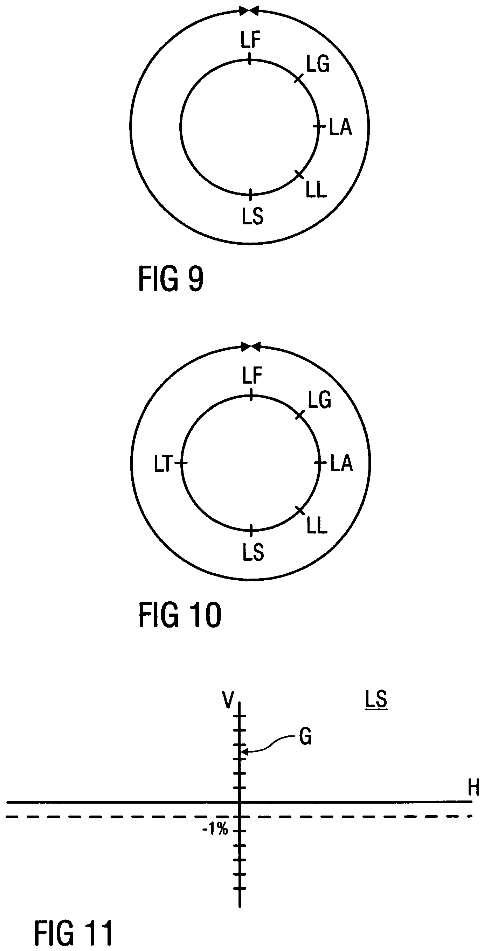

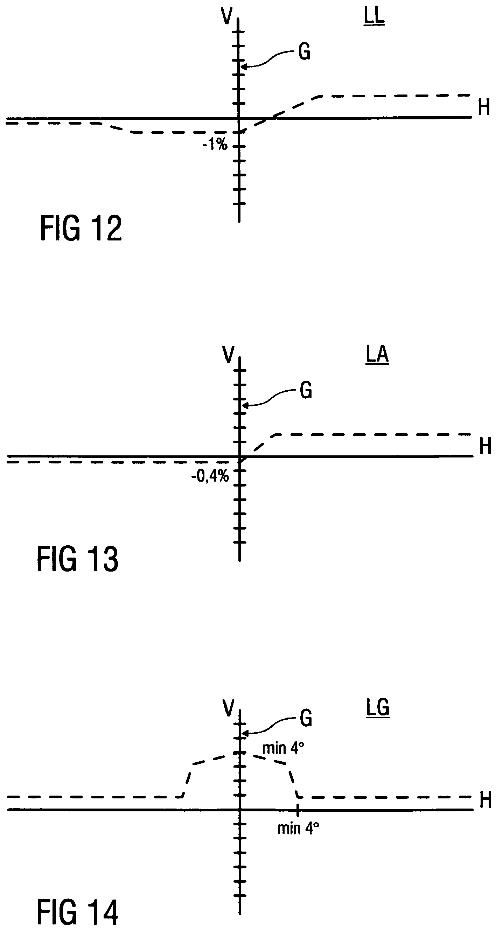

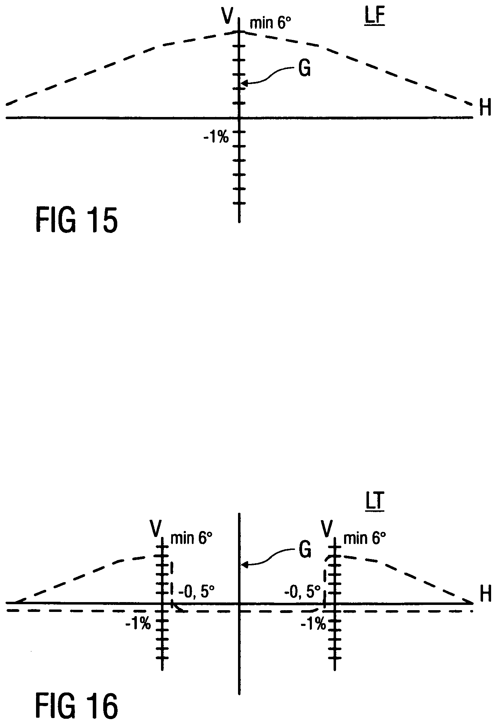

Um alle benötigten Lichtbilder des Fahrzeugs 1, d. h. neben den beschriebenen Lichtbildern auch weitere Lichtbilder zur Verwendung in normalen Verkehrssituationen mit einem optischen Element 1.1.1, 1.2.1 pro Scheinwerfer 1.1, 1.2 erzeugen zu können, sind die weiteren Lichtdurchtrittsstrukturen, welche zur Erzeugung der verschiedenen Lichtbilder jeweils unterschiedlich ausgeformt sind, d. h. beispielsweise eine unterschiedliche Breite und/oder Höhe aufweisen, auf oder in dem optischen Element 1.1.1, 1.2.1 erfindungsgemäß derart angeordnet oder ausgebildet, dass bei einer bevorzugten Verwendung einer Walze als optisches Element 1.1.1, 1.2.1 durch ein Drehen, Schwenken und/oder Verschieben des optischen Elementes 1.1.1, 1.2.1 die in den Figuren 9 und 10 dargestellte Abfolge der Lichtbilder erzeugbar ist, wobei die Figur 10 eine bevorzugte Ausführungsform ist, welche das Lichtbild "Teilfernlicht" LT, welches in Figur 16 näher dargestellt ist, umfasst. In Figur 9 ist eine vereinfachte Abfolge ohne das Lichtbild "Teilfernlicht" LT dargestellt. Neben dem optionalen Lichtbild "Teilfernlicht" LT umfassen beide Abfolgen das in Figur 11 näher dargestellte Lichtbild "symmetrisches Licht" LS, das in Figur 12 näher dargestellte Lichtbild "Landstraße" LL, das in Figur 13 näher dargestellte Lichtbild "Autobahn" LA, das in Figur 14 näher dargestellte Lichtbild "Gefahrenlicht" LG und das in Figur 15 näher dargestellte Lichtbild "Fernlicht" LF, welche mittels der Walze als optischem Element 1.1.1, 1.2.1 in der dargestellten Reihenfolge einstellbar sind.

Die zur Realisierung der verschiedenen Lichtbilder erforderlichen Lichtdurchtrittsstrukturen und die Lichtdurchtrittsöffnung LO sind dabei über einen Umfang der Walze verteilt mit jeweils einer unterschiedlichen Ausformung, d. h. beispielsweise mit einer unterschiedlichen Breite und/oder Höhe in die Walze eingebracht, um das jeweilige Lichtbild durch eine jeweils unterschiedliche Begrenzung eines von der Lichtquelle abgestrahlten Lichtstrahls zu erzeugen. Die weiteren Lichtdurchtrittsstrukturen und die Lichtdurchtrittsöffnung LO sind dabei in einer derartigen Reihenfolge verteilt, dass durch ein Drehen, Schwenken und/oder Verschieben der Walze nacheinander die jeweilige Lichtdurchtrittsstruktur in der optischen Achse oA der Lichtquelle positioniert ist, um durch die entsprechende Begrenzung des von der Lichtquelle abgestrahlten Lichtstrahls das jeweilige Lichtbild zu erzeugen.

Dadurch ist mittels der Walze bei der in Figur 9 dargestellten Ausführungsform bei einer Drehung in eine Richtung beispielsweise ausgehend vom Lichtbild "symmetrisches Licht" LS in das Lichtbild "Landstraße" LL, danach in das Lichtbild "Autobahn" LA, gegebenenfalls unter Verwendung einer mittels einer Leuchtweitenregulierung eingestellten maximalen Leuchtweite, danach in das Lichtbild "Gefahrenlicht" LG, danach in das Lichtbild "Fernlicht" LF und wieder zurück in das Lichtbild "symmetrisches Licht" LS schaltbar. Durch eine Drehung der Walze in eine entgegengesetzte Richtung ist diese Abfolge entsprechend umgekehrt.

Bei der in Figur 10 dargestellten bevorzugten Ausführungsform ist bei Drehung in eine Richtung nacheinander beispielsweise ausgehend vom Lichtbild "symmetrisches Licht" LS in das Lichtbild "Landstraße" LL, danach in das Lichtbild "Autobahn" LA, danach in das Lichtbild "Gefahrenlicht" LG, danach in das Lichtbild "Fernlicht" LF, danach in das Lichtbild "Teilfernlicht" LT und wieder zurück in das Lichtbild "symmetrisches Licht" LS schaltbar. Auch hier ist durch eine Drehung der Walze in eine entgegengesetzte Richtung diese Abfolge entsprechend umgekehrt.

Bei Verwendung einer Blende als optisches Element 1.1.1, 1.2.1 sind die Lichtdurchtrittsöffnung LO und die verschiedenen weiteren Lichtdurchtrittsstrukturen zur Erzeugung beispielsweise horizontal und/oder vertikal über eine Fläche der Blende verteilt. Sie sind derart angeordnet, dass beispielsweise durch horizontales oder vertikales Verschieben der Blende eine andere Lichtdurchtrittsstruktur in der optischen Achse oA der Lichtquelle angeordnet ist, wobei die verschieden ausgeformten Lichtdurchtrittsstrukturen in einer derartigen Reihenfolge angeordnet sind, dass durch ein jeweils teilweises horizontales oder vertikales Verschieben der Blende die Lichtbilder in der vorgegebenen Reihenfolge erzeugbar sind. Dadurch ist mittels der Blende ebenfalls die in Figur 9 dargestellte Abfolge der Lichtbilder erzeugbar für den Fall, das kein Lichtbild "Teilfernlicht" LT verwendet wird. Bei Verwendung des Lichtbildes "Teilfernlicht" LT weicht die Abfolge gegenüber der Figur 10 etwas ab, so dass, beispielsweise ausgehend vom Lichtbild "symmetrisches Licht" LS in das Lichtbild "Landstraße" LL, danach in das Lichtbild "Autobahn" LA, danach in das Lichtbild "Gefahrenlicht" LG, danach in das Lichtbild "Teilfernlicht" LT, danach in das Lichtbild "Fernlicht" LF und wieder zurück in das Lichtbild "symmetrisches Licht" LS schaltbar ist und umgekehrt.

Durch diese erfindungsgemäße Realisierung der Abfolge der Lichtbilder sind die einzelnen Lichtbilder auf ansprechende und schnell zu realisierende Weise zu erreichen, wobei insbesondere ein Übergang zwischen den einzelnen Lichtbildern fließend und für einen Fahrzeugführer möglichst unauffällig und nicht störend erfolgt. Um insbesondere einen möglichst fließenden und stetigen Übergang vom Lichtbild "Autobahn" LA in das Lichtbild "Fernlicht" LF über das Lichtbild "Gefahrenlicht" LG zu realisieren, ist ein Erscheinungsbild des Lichtbildes "Gefahrenlicht" LG durch eine entsprechende Ausformung der Lichtdurchtrittsöffnung LO entsprechend so zu gestalten, dass das Lichtbild "Gefahrenlicht" LG einem miniaturisierten Lichtbild "Fernlicht" LF entspricht, wie in Figur 14 in Vergleich zu Figur 15 dargestellt. D. h. die Lichtdurchtrittsöffnung zur Realisierung des Lichtbildes "Fernlicht" LF ist beispielsweise etwas tiefer in einen Walzenkörper der als optisches Element 1.1.1, 1.2.1 ausgebildeten Walze eingeschnitten und weist eine etwas breitere Ausdehnung auf, um den von der Lichtquelle abgestrahlten Lichtstrahl derart zu begrenzen, dass das Lichtbild "Fernlicht" LF ausbildbar ist.

Ein Verlauf der Hell-Dunkel-Grenze des Lichtbildes "Gefahrenlicht" LG ist vergleichbar mit dem Verlauf der Hell-Dunkel-Grenze des Lichtbildes "Fernlicht" LF ausgebildet, jedoch mit deutlich kleineren Abmessungen, d. h. eine vertikale Ausdehnung V und insbesondere eine horizontale Ausdehnung H des Lichtbildes "Gefahrenlicht" LG sind wesentlich kleiner als die vertikale Ausdehnung V und die horizontale Ausdehnung H des Lichtbildes "Fernlicht" LF. Auf diese Weise ist vom Lichtbild "Autobahn" LA durch Überfahren des Lichtbildes "Gefahrenlicht" LG in das Lichtbild "Fernlicht" LF schaltbar, ohne ein momentan unnötiges Lichtbild "Gefahrenlicht" LG länger als während des Überfahrens einzustellen, welches den Fahrzeugführer irritieren würde. Des weiteren ist ein Kontrast der Hell-Dunkel-Grenze des Lichtbildes "Gefahrenlicht" LG schwach ausgeführt, so dass keine störenden Kanten beim Überfahren des Lichtbildes "Gefahrenlicht" LG sichtbar sind und ein fließender Übergang in das Lichtbild "Fernlicht" LF ermöglicht ist.

Des Weiteren ist die Lichtdurchtrittsöffnung LO derart ausgebildet und angeordnet, dass die Lichtfläche A bei nicht geschwenkter Lichtverteilung L1, L2 symmetrisch zu einer Geradeausachse G des Fahrzeugs 1 erzeugbar ist, wobei eine Ausdehnung der Lichtfläche A kleiner ist als eine Ausdehnung einer durch das Lichtbild "Fernlicht" LF erzeugbaren Fernlichtfläche, d. h. das Lichtbild "Gefahrenlicht" LG ist symmetrisch zu der Geradeausachse G des Fahrzeugs 1 ausgeformt, wobei auch der hellste Bereich des Lichtbildes "Gefahrenlicht" LG auf der Geradeausachse G liegt (die Geradeausachse G ist in den Figuren 11 bis 16 durch die Vertikallinie repräsentiert). Dadurch ist das Lichtbild "Gefahrenlicht" LG mit dem hellsten Leuchtbereich des Scheinwerfers 1.1, 1.2 realisierbar und es ist eine Umschaltung beispielsweise vom Lichtbild "Landstraße" LL oder vom Lichtbild "Autobahn" LA in das Lichtbild "Fernlicht" LF ohne eine zusätzliche Schwenkbewegung der Lichtverteilung L1, L2 ermöglicht.

Auf diese Weise stellt sich für den Fahrzeugführer der Eindruck dar, dass aus einer Lichtkegelmitte, dem so genannten Lichtschwerpunkt, nach außen eine Beleuchtung stetig zunimmt, wodurch ein derartiger Lichtbildwechsel sehr harmonisch wirkt. Dabei ist ein derartiger Übergang zwischen den Lichtbildern vorzugsweise mit einer fest vorgegebenen Geschwindigkeit zu durchfahren, so dass die Wirkung auf den Fahrzeugführer stets gleichbleibend harmonisch ist.

Die verschiedenen Lichtbilder und insbesondere deren jeweilige vertikale Ausdehnung V und horizontale Ausdehnung H sind in den Figuren 11 bis 16 näher dargestellt, wobei eine Ausformung, insbesondere eine Außenform der in dem optischen Element 1.1.1, 1.2.1 eingebrachten jeweiligen Lichtdurchtrittsstruktur einer Außenform des jeweiligen Lichtbildes entspricht. Das in Figur 11 dargestellte Lichtbild "symmetrisches Licht" LS ist horizontal ausgerichtet und leicht nach unten gerichtet. Das in Figur 12 dargestellte Lichtbild "Landstraße" LL ist links der Geradeausachse G zunächst abgesenkt und etwas weiter links wieder angehoben, um den auf Landstraßen sehr nahe das Fahrzeug 1 passierenden Gegenverkehr nicht zu blenden. Die vertikale Ausdehnung des rechten Teils des Lichtbildes "Landstraße" LL ist deutlich größer, um auf einer Fahrspur des Fahrzeugs 1 eine gute Ausleuchtung zu erzielen. Dies gilt analog für das in Figur 13 dargestellte Lichtbild "Autobahn" LA, wobei bei diesem der linke Teil konstant abgesenkt ist, um den Gegenverkehr, welcher das Fahrzeug 1 in einer größeren seitlichen Entfernung passiert, nicht zu blenden.

Das in Figur 14 dargestellte Lichtbild "Gefahrenlicht" LG und das in Figur 15 dargestellte Lichtbild "Fernlicht" LF sind wie bereits beschrieben ausgebildet, wobei das Lichtbild "Fernlicht" LF sowohl eine maximal mögliche horizontale Ausdehnung H als auch eine maximal mögliche vertikale Ausdehnung V aufweist, so dass eine maximal mögliche Ausleuchtung eines Vorfeldbereiches des Fahrzeugs 1 ermöglicht ist. Das in Figur 16 dargestellte Lichtbild "Teilfernlicht" LT weist bei nicht geschwenkten Lichtverteilungen L1, L2 gegenüber dem Lichtbild "Fernlicht" LF eine Absenkung der vertikalen Ausdehnung V im Bereich der Geradeausachse G auf, so dass beispielsweise eine Blendung eines vorausfahrenden Fahrzeugs oder eines entgegenkommenden Fahrzeugs vermieden ist, aber eine maximal mögliche seitliche Ausleuchtung des Vorfeldbereiches des Fahrzeugs 1 ermöglicht ist. Auf diese Weise sind beispielsweise Fußgänger an einem Fahrbahnrand für den Fahrzeugführer sehr frühzeitig erkennbar.

## Patentansprüche

1. Verfahren zur Verwendung einer Vorrichtung zur Steuerung eines Fahrlichts (L) eines Fahrzeugs (1), welche
- aus zwei Scheinwerfern (1.1, 1.2), einem linken Scheinwerfer (1.1) und einem rechten Scheinwerfer (1.2), besteht, wobei
- die Scheinwerfer (1.1, 1.2) jeweils zumindest ein schwenkbares optisches Element zur Erzeugung eines Lichtbilds und/oder einer Fahrlichtverteilung umfassen, wobei
- das jeweilige optische Element eine Walze (1.1.1, 1.2.1) ist und auf der Walze (1.1.1, 1.2.1) mehrere Lichtdurchtrittsstrukturen zur Erzeugung verschiedener Lichtbilder und/oder Fahrlichtverteilungen auf- oder eingebracht sind, und
- wobei die Walze (1.1.1) für den linken Scheinwerfer (1.1) sich von der Walze (1.2.1) für den rechten Scheinwerfer (1.2) in mindestens einer Lichtdurchtrittsstruktur unterscheidet,
**dadurch gekennzeichnet, dass**
- eine Kollisionsgefahr mit einem unbeleuchteten Objekt (O2) detektiert wird,
- wobei bei einer detektierten Kollisionsgefahr mit dem unbeleuchteten Objekt (O2) eine Sonderfunktion des Fahrlichts aktiviert wird, wobei
- mit einer Lichtdurchtrittsstruktur in Form einer Lichtdurchtrittsöffnung (LO) der Walze (1.1.1) des linken Scheinwerfers (1.1) eine auf das unbeleuchtete Objekt (O2) vor dem Fahrzeug gerichtete begrenzte Lichtfläche (A) erzeugt wird, wobei Mittel zum horizontalen Schwenken einer Lichtverteilung (L1, L2) verwendet werden, um die begrenzte Lichtfläche (A) auf das unbeleuchtete Objekt (O2) zu schwenken, und
- mittels der Walze (1.2.1) des rechten Scheinwerfers (1.2) in Abhängigkeit von einem entgegenkommenden oder vorausfahrenden Fahrzeug ein Lichtbild und/oder eine Fahrlichtverteilung wie Abblendlicht oder Fernlicht oder Teilfernlicht erzeugt wird.

2. Verfahren nach Anspruch 1,
**dadurch gekennzeichnet, dass**
die Walze (1.1.1) des linken Scheinwerfers (1.1) ausgehend von der Lichtdurchtrittsöffnung (LO) für eine begrenzte Lichtfläche (A) durch Drehung in eine Richtung als nächstgelegenes Lichtbild ein Lichtbild Fernlicht oder ein Lichtbild Teilfernlicht und danach das Lichtbild Fernlicht erzeugt.

3. Verfahren nach einem der vorhergehenden Ansprüche,
**dadurch gekennzeichnet, dass**
bei einer detektierten Gefahrensituation ein Blinken der Scheinwerfer (1.1, 1.2) links oder rechts durch
- Ein- und Ausschalten der jeweiligen Lichtquelle
oder
- durch einen alternierenden Wechsel von Lichtdurchtrittstrukturen erzeugt wird.

## Claims

1. Method for using a device for controlling a driving light (L) of a vehicle, which
- consists of two headlamps (1.1, 1.2), these being a left headlamp (1.1) and a right headlamp (1.2), wherein
- each of the headlamps (1.1, 1.2) comprises at least one pivotable optical element for generating a light image and/or a driving light distribution, wherein
- the respective optical element is a roller (1.1.1, 1.2.1) and several light passage structures are applied to or incorporated into the roller (1.1.1, 1.2.1) for generating various light images and/or driving light distributions, and
- wherein the roller (1.1.1) for the left headlamp (1.1) differs from the roller (1.2.1) for the right headlamp (1.2) in at least one light passage structure,
**characterised in that**
- a collision risk with an unlit object (O2) is detected,
- wherein on detection of a collision risk with the unlit object (O2) a special function of the driving light is activated, wherein
- a limited light area (A) directed onto the unlit object (O2) in front of the vehicle is generated with a light passage structure in the form of a light passage opening (LO) of the roller (1.1.1) of the left headlamp (1.1), wherein means for the horizontal pivoting of a light distribution (L1, L2) are used for pivoting the limited light area (A) onto the unlit object (O2). and
- a light image and/or a driving light distribution such as dipped beam or main beam of part-main beam is generated by means of the roller (1.2.1) of the right headlamp (1.2) as a function of an oncoming or preceding vehicle.

2. Method according to claim 1,
**characterised in that**
the roller (1.1.1) of the left headlamp (1.1) generates, starting from the light passage opening (LO) for a limited light area (A), as a nearest light image a light image main beam or a light image part-main beam followed by the light image main beam by rotation in one direction.

3. Method according to any of the preceding claims,
**characterised in that**
on detection of a risk situation, a flashing of the headlamps (1,1. 1,2) left or right is generated by
- a switching-on and -off of the respective light source
or
- an alternation of light passage structures.

## Revendications

1. Procédé d'utilisation d'un dispositif de commande de feux de route (L) d'un véhicule automobile (1), qui
- est constitué de deux phares (1.1, 1.2), d'un phare gauche (1.1) et d'un phare droit (1.2),
- les phares (1.1, 1.2) comprenant respectivement au moins un élément optique pivotant destiné à produire une photo et/ou une distribution des feux de route,
- l'élément optique respectif est un cylindre (1.1.1, 1.2.1) et sur le cylindre (1.1.1, 1.2.1) sont appliquées ou insérées plusieurs structures de passage de lumière destinées à produire différentes photos et/ou des distributions de feux de route, et
- le cylindre (1.1.1) pour le phare gauche (1.1) se distingue du cylindre (1.2.1) pour le phare droit (1.2) par au moins une structure de passage de lumière,
**caractérisé en ce que**
- un risque de collision avec un objet non éclairé (O2) est détecté
- en cas de détection d'un risque de collision avec l'objet non éclairé (O2), une fonction spéciale des feux de route est activée,
- - au moyen d'une structure de passage de lumière sous la forme d'une ouverture de passage de lumière (LO) du cylindre (1.1.1) du phare gauche (1.1) une surface lumineuse (A) limitée orientée vers l'objet non éclairé (O2) devant le véhicule peut être produite, des moyens de pivotement horizontal d'une distribution lumineuse (L1, L2) étant utilisés pour faire pivoter la surface lumineuse limitée (A) sur l'objet non éclairé (O2), et
- - le cylindre (1.2.1) du phare droit (1.2), en fonction d'un véhicule précédent ou venant en sens inverse, produit une photo et/ou une distribution des feux de route telle que feu de croisement, feu de route, feu de route partiel.

2. Procédé selon la revendication 1, **caractérisé en ce que** le cylindre (1.1.1) du phare gauche (1.1) produit une photo feu de route ou une photo feu de route partiel et ensuite la photo feu de route en tant que photo la plus proche à partir de l'ouverture de passage de lumière (LO) pour une surface lumineuse limitée (A) par rotation dans une direction.

3. Procédé selon l'une quelconque des revendications précédentes, **caractérisé en ce que** lors d'une situation dangereuse détectée un clignotement des phares (1.1, 1.2) droit ou gauche est produit par
- allumage et arrêt de la source lumineuse concernée
ou
- par un changement alterné des structures de passage de lumière.
